# EUROPÄISCHE PATENTSCHRIFT

(11) **EP 4 001 208 B1**
(45) Veröffentlichungstag und Bekanntmachung des Hinweises auf die Patenterteilung: **23.09.2026**
(21) Anmeldenummer: 21209178.9
(22) Anmeldetag: 19.11.2021
(51) Int. Cl.: B67C 3/00, B67C 3/02, A23L 2/54, A23L 2/56, A23L 2/60

(54) **VORRICHTUNG ZUM BEFÜLLEN EINES BEHÄLTERS MIT EINEM FÜLLPRODUKT**
DEVICE FOR FILLING A CONTAINER WITH A FILLING PRODUCT
DISPOSITIF DE REMPLISSAGE D'UN RÉCIPIENT D'UN PRODUIT DE REMPLISSAGE

(30) Priorität: 20.11.2020 DE 102020130740
(43) Veröffentlichungstag der Anmeldung: 25.05.2022
(73) Patentinhaber: KRONES AG, 93073 Neutraubling (DE)
(72) Erfinder: Oehmichen, Thomas, 93073 Neutraubling (DE); Laumer, Christina, 93073 Neutraubling (DE); Justl, Johanna, 93073 Neutraubling (DE); Winzinger, Frank, 93073 Neutraubling (DE); Hoeller, Stefan, 93073 Neutraubling (DE); Engel, Erwin, 93073 Neutraubling (DE); Micko, Christoph, 93073 Neutraubling (DE); Mueller, Holger, 93073 Neutraubling (DE)
(74) Vertreter: Nordmeyer, Philipp Werner

(56) Entgegenhaltungen:
- EP-A1- 0 602 387
- WO-A1-2019/043240
- DE-A1- 102016 105 524
- DE-A1- 102016 224 562
- US-A1- 2010 300 577
- US-A1- 2012 147 694
- US-B1- 6 391 122

## Beschreibung

### Technisches Gebiet

Die vorliegende Erfindung betrifft eine Vorrichtung und ein Verfahren zum Befüllen eines Behälters mit einem mehrkomponentigen Füllprodukt. Die Vorrichtung kommt insbesondere in einer Getränkeabfüllanlage zur Anwendung, so etwa zum Abfüllen von Softdrinks, Biermischgetränken, Säften und dergleichen.

### Stand der Technik

In Getränkeabfüllanlagen werden Produkttanks zur Aufnahme und Zwischenlagerung des abzufüllenden Produkts oder Komponenten desselben an mehreren Stellen eingesetzt. So ist beispielsweise bekannt, das abzufüllende Produkt in einem Mischer anzumischen, wobei hierbei üblicherweise ein Grundstoff und/oder Sirup in einen Produktwasserstrom eingemischt wird. Das so hergestellte Füllprodukt wird in einem als "Puffertank" bezeichneten Produkttank aufgenommen und darin weiter vermischt, bevor es einem Füllerkessel zugeführt wird, der eine Vielzahl von Füllventilen zum Einleiten des Füllprodukts in entsprechende Behälter versorgt.

Die technologische Trennung zwischen Mischer und Füller und die Verwendung individueller Tanks haben eine gute Durchmischung des Füllprodukts zur Folge, Nachteile liegen jedoch darin, dass die Gesamtanlage maschinenbaulich komplex ist - dies betrifft auch die Kommunikation zwischen dem Mischer und dem Füller - und aufwändig zu warten ist. Bei einem Produktwechsel muss der Puffertank des Mischers gereinigt werden, wodurch der Produktwechsel zweitaufwändig ist.

Es sind auf dem technischen Gebiet daher zunehmend Bestrebungen zu erkennen, den Mischer und den Füller baulich zu integrieren. Beispielsweise ist es möglich, das Füllprodukt vom Puffertank ohne einen weiteren zwischengeschalteten Füllerkessel den Füllventilen zuzuleiten. Eine Vorrichtung dieser Art geht aus der WO 2019/043240 A1 hervor. Alternativ kann auf einen Puffertank im Mischer verzichtet werden, wobei der Füllerkessel die Funktion des Puffertanks mitübernimmt. Eine solche Vorrichtung ist in der DE 10 2016 105 524 A1 beschrieben.

Die maschinenbauliche Integration von Mischer und Füller ist jedoch mit technischen Problemen verbunden, die insbesondere in dem Fall, in dem auf einen Puffertank im Mischer verzichtet wird, die Qualitätsbeständigkeit des abzufüllenden Produkts betreffen. So können die Ausmischgenauigkeit und Homogenität des Füllprodukts unter dem verkürzten Herstellungsweg leiden.

Die US 2010/0300577 A1 beschreibt eine Vorrichtung zur Abfüllung von Flüssigkeiten gemäß dem Oberbegriff des Anspruchs 1, umfassend einen Füllerkessel und daran angeschlossene Füllelemente sowie eine Messvorrichtung zur quantitativen und/oder qualitativen Analyse der Flüssigkeit.

Die DE 10 2016 224 562 A1 beschreibt eine Vorrichtung und ein Verfahren zur Herstellung sauerstoffempfindlicher Getränke. Die US 2012/0147694 A1 beschreibt einen Mischer für eine Getränkeabfüllanlage. Die EP 0 602 387 A1 beschreibt ein Verfahren und eine Anlage zum Entlüften, Mischen und Karbonisieren von Getränken. Die US 6,391,122 B1 beschreibt ein Verfahren zur abschnittsweisen CIP-Reinigung.

### Darstellung der Erfindung

Eine Aufgabe der Erfindung besteht darin, eine verbesserte Vorrichtung zum Befüllen eines Behälters mit einem mehrkomponentigen Füllprodukt, vorzugsweise in einer Getränkeabfüllanlage, bereitzustellen, insbesondere die Ausmischgenauigkeit bei der Herstellung des Füllprodukts und dessen Homogenität zu verbessern.

Die Aufgabe wird durch eine Vorrichtung mit den Merkmalen des Anspruchs 1 und ein Verfahren mit den Merkmalen des unabhängigen Verfahrensanspruchs gelöst. Vorteilhafte Weiterbildungen folgen aus den Unteransprüchen, der folgenden Darstellung der Erfindung sowie der Beschreibung bevorzugter Ausführungsbeispiele.

Die Vorrichtung gemäß der Erfindung dient dem Befüllen von Behältern mit einem mehrkomponentigen Füllprodukt. Sie kommt besonders bevorzugt in einer Getränkeabfüllanlage zur Anwendung, beispielsweise zum Abfüllen von Softdrinks, Biermischgetränken, Säften und dergleichen.

Das Füllprodukt umfasst zumindest zwei Füllproduktkomponenten, wobei eine der Komponenten zur sprachlichen Unterscheidung hierin auch als "Basisflüssigkeit" bezeichnet sei und hinsichtlich der Menge vorzugsweise als Hauptkomponente fungiert.

Neben dem Abfüllen des Füllprodukts ist die Vorrichtung zum Ausmischen der Füllproduktkomponenten eingerichtet und übernimmt insofern zumindest einen Teil des Herstellungsprozesses des abzufüllenden Füllprodukts.

Die Basisflüssigkeit ist besonders bevorzugt Wasser oder Milch bzw. eine wasser-, milch- und/oder molkehaltige Flüssigkeit. Eine oder mehrere weitere Dosagekomponenten können beispielsweise Sirup, Fruchtfleisch enthaltende Flüssigkeiten, Pulpe, Aromen usw. umfassen. Ferner kann das Getränk mit CO₂ versetzt werden.

Die Vorrichtung umfasst einen Füller mit zumindest einem Füllorgan, das zum Einleiten des Füllprodukts in den Behälter eingerichtet ist, und einem Füllerkessel, vorzugsweise als Ringkessel ausgeführt, der zur Zwischenpufferung des Füllprodukts eingerichtet ist und mit dem Füllorgan über eine Produktleitung in Fluidverbindung steht, um das Füllorgan mit dem Füllprodukt zu versorgen.

In der Regel ist eine Vielzahl von Füllorganen vorgesehen, die im Fall einer Rundläuferbauweise am Außenumfang eines Füllerkarussells angeordnet sind. Insbesondere kann sich das Füllerkarussell während des regulären Produktionsbetriebs kontinuierlich drehen.

Wenn Bezeichnungen wie "Füllorgan", "Füllventil", "Produktleitung", "Behälter" und andere im Singular verwendet werden, so erfolgt dies zumeist der sprachlichen Einfachheit halber. Der Plural ist mitumfasst, es sei denn er ist ausdrücklich oder aus technischen Gründen ausgeschlossen.

Die Vorrichtung weist ferner einen Mischer auf, der eingerichtet ist, um das Füllprodukt aus mehreren Füllproduktkomponenten anzumischen.

Der Füller und der Mischer sind Baueinheiten, die herkömmlich als strukturell und technologisch getrennte Maschinen mit eigenen Pufferbehältern konzipiert waren und nun mehr und mehr miteinander integriert werden. Zu diesem Zweck weist der Mischer eine Umlaufleitung auf, die an zumindest einem Kesseleinlauf und an zumindest einem Kesselablauf mit dem Füllerkessel in Fluidverbindung steht und eingerichtet ist, um das Füllprodukt über den Kesseleinlauf dem Füllerkessel zuzuführen und über den Kesselablauf aus dem Füllerkessel abzuziehen, wodurch das Füllprodukt in einem regulären Betrieb in einem Kreislauf geführt wird. Als regulärer Betrieb wird der Prozess des Ausmischens und Abfüllens des Füllprodukts durch die Vorrichtung angesehen.

Eine Führung des Füllprodukts in einer Umlaufleitung kann mittels einer Pumpe durchgeführt werden.

Der Mischer weist mindestens einen, bevorzugt zumindest zwei Dosagezweige auf, der/die eingerichtet ist/sind, um je eine Füllproduktkomponente in die Umlaufleitung einzuleiten.

Die Dosagezweige können je ein Dosagereservoir umfassen, das die entsprechende Dosagekomponente vorhält. Allerdings kann die Dosagekomponente, insbesondere die Hauptkomponente, auch über eine (permanente) Zuleitung bereitgestellt werden.

Ein Dosagezweig, mehrere oder alle Dosagezweige umfassen vorzugsweise jeweils einen Durchflussmesser, eingerichtet, um den im entsprechenden Dosagezweig geförderten beziehungsweise transportierten Volumenstrom zu messen und die Daten einer Steuerung für die Regelung beziehungsweise Steuerung der Vorrichtung zur Verfügung zu stellen.

Ferner sind vorzugsweise Pumpen, Regelventile oder andere technische Mittel zum Transportieren und/oder Eindosieren der entsprechenden Dosagekomponente in die Umlaufleitung in den Dosagezweigen vorgesehen.

Im Fall nur eines in die Umlaufleitung mündenden Dosagezweigs kann eine Vormischkammer vorgesehen sein, in welche mehrere Unterdosagezweige münden, wobei die Vormischkammer über den einen Dosagezweig mit der Umlaufleitung verbunden ist.

Für die Unterdosagezweige gilt das bisher über die Dosagezweige gesagte (Verbindung mit je einem Dosagereservoir, jeweils ein Durchflussmesser...).

In der Vormischkammer kann mittels eines in der Vormischkammer angeordneten Sensors oder mehrerer Sensoren eine Dichte und/oder eine CO₂-Konzentration und/oder ein Brix-Wert und/oder eine Zuckerkonzentration ermittelt werden. Die Ermittlung kann kontinuierlich erfolgen. Es ist möglich, dass die ermittelten Werte an eine Steuerung weitergegeben werden, welche bei einer Feststellung einer Abweichung von einem Sollwert eine Korrektur vornimmt, bei welcher von lediglich bestimmten Komponenten eine zusätzliche Zugabe durchgeführt bzw. deren Zugabedurchfluss verändert wird. Bei der Vormischkammer kann es sich auch lediglich um ein Rohr handeln.

Die Bezeichnung "Dosagekomponente" wird hierin allgemein verwendet und umfasst Flüssigkeiten, beispielsweise Wasser, Sirup, Pulpe usw., ebenso wie Gase, beispielsweise CO₂.

Gemäß der Erfindung ist der Mischer in Schwerkraftrichtung gesehen zumindest teilweise oberhalb des Füllers angeordnet.

Eine solche gegenüber dem Füller höherstehende Anordnung des Mischers hat zur Folge, dass die Füllproduktkomponenten mit höherer Genauigkeit in den Füllerkessel eindosiert werden können, da die Eindosierung nicht gegen den Druck im Füllerkessel erfolgen muss. Aus dem gleichen Grund lassen sich Produktverluste minimieren. Die Erleichterung der Anmischung wirkt sich insbesondere bei der integralen Bauweise mit verkürztem Herstellungsweg positiv auf die Homogenität und somit Qualität des Füllprodukts aus.

Vorzugsweise sind die Einmündungen eines, mehrerer oder aller Dosagezweige in die Umlaufleitung oberhalb eines regulären Füllstands des Füllerkessels angeordnet, wodurch sich die genannten Wirkungen weiter optimieren lassen. Als regulärer Füllstand wird ein bestimmter, für den regulären Betrieb optimaler Füllstand im Füllerkessel angesehen.

Vorzugsweise sind die Einmündungen eines, mehrerer oder aller Dosagezweige in die Umlaufleitung oberhalb des Füllerkessels angeordnet, um die genannten Wirkungen unabhängig vom Füllstand im Füllerkessel zu gewährleisten.

Die räumlichen Bezeichnungen "oberhalb", "unterhalb" und dergleichen sind hierin auf die Schwerkraftrichtung bezogen und durch die bestimmungsgemäße Anwendung der Vorrichtung eindeutig definiert. Die Bezeichnungen "vor", "hinter" und dergleichen, sofern sie zur Beschreibung des Leitungssystems dienen, sind auf die Strömungsrichtung des Füllprodukts bezogen; d.h. die Bezeichnung "vor" meint stromaufwärts und die Bezeichnung "hinter" meint stromabwärts. Im Fall einer Kreisleitung wie der genannten Umlaufleitung sind die so definierten relativen Positionen auf den kürzesten Weg bezogen.

Vorzugsweise ist der Mischer pufferfrei ausgebildet und steht pufferfrei mit dem Füllerkessel in Fluidverbindung, wodurch auf einen eigenen Puffer im Mischer verzichtet wird. Dadurch wird ein weiter integrierter, besonders effizienter Aufbau der Vorrichtung erzielt.

Des Weiteren wird das insgesamt zwischengepufferte beziehungsweise vorgehaltene Füllproduktvolumen reduziert, woraus eine weitere Effizienzsteigerung der Vorrichtung resultiert, da am Füllende oder bei einem Produktwechsel weniger oder überhaupt kein Füllprodukt verworfen werden muss. Weiterhin lässt sich die Vorrichtung einfacher steuern beziehungsweise regeln, da zwischen dem Mischer und dem Füller eine Koordination beziehungsweise eine Überwachung von Füllhöhen mehrerer Puffer, die miteinander wechselwirken, vermieden werden kann.

Unter "pufferfrei" wird hierin verstanden, dass in dem so charakterisierten Umfeld keine dedizierte Puffervorrichtung vorliegt, die das puffernde Aufnehmen von Füllprodukt, beispielsweise während Produktionspausen oder bei Störungen der Füllvorrichtung, ermöglicht. Als Puffervorrichtung werden insbesondere nicht die vorliegenden Leitungen verstanden, durch die hindurch das Füllprodukt fließt und die während des Füllbetriebs entweder über ihren gesamten Querschnitt hinweg oder zumindest über einen Teil ihres Querschnitts hinweg mit dem Füllprodukt befüllt sind. Unter einer Puffervorrichtung wird vielmehr nur ein dediziert als solches vorgesehenes Pufferreservoir - d.h. ein Kessel, Tank, Behälter oder dergleichen - verstanden, welches ein entsprechendes Puffervolumen bereitstellt. Damit kann die Puffervorrichtung eine substantielle Menge an zusätzlichem Füllprodukt aufnehmen, welches in Produktionspausen oder bei Anlagenstörungen anfällt und nicht direkt von der Füllvorrichtung abgenommen wird. Ferner beziehen sich die Bezeichnungen "pufferfrei", "Puffer" usw. auf das Füllprodukt; d.h. etwaige Reservoire im Mischer zur Vorhaltung von zu vermischenden Füllproduktkomponenten fallen nicht darunter.

Erfindungsgemäß weist der Mischer einen Wärmetauscher auf, der zur Temperierung des Füllprodukts in der Umlaufleitung eingerichtet ist.

Besonders bevorzugt ist der Wärmetauscher stromabwärts bezüglich der Einleitungen der Dosagezweige in die Umlaufleitung angeordnet, d.h. in einem dem Füllerkessel zulaufenden Arm der Umlaufleitung, der hierin auch als "Umlaufzuleitung" bezeichnet ist. Auf diese Weise kann das Anmischen des Füllprodukts im Mischer gleichzeitig zur Temperierung des Füllprodukts genutzt werden. Vorzugsweise ist der Wärmetauscher zum Kühlen des Füllprodukts eingerichtet, wodurch die CO₂-Aufnahme im Fall karbonisierter Füllprodukte verbessert wird.

Alternativ kann der Wärmetauscher zum Erhitzen des Füllprodukts, beispielsweise bei einer Heißabfüllung, verwendet werden.

Werden auf einer Produktionsanlage bestimmte Getränke sowohl warm als auch kalt abgefüllt, kann derselbe Wärmetauscher zur Temperierung von beidem verwendet werden. Hierfür kann der Sekundärkreislauf, in dem das Wärmeaustauschträgermedium geführt wird, sowohl mit einem Kühler als auch mit einem Erhitzer verbunden werden, vorzugsweise über eine geeignete Ventilschaltung.

Unter den Dosagezweigen kann ein erster Dosagezweig für die Zuleitung einer Hauptkomponente, vorzugsweise Wasser, eingerichtet sein. Der erste Dosagezweig kann eine Zufuhrpumpe aufweisen, um die Hauptkomponente der Umlaufleitung aktiv zuzuführen. Die Zufuhrpumpe wird von der Steuerung angesteuert. Die Zufuhrpumpe ist vorzugsweise als Kreiselpumpe ausgeführt. Allerdings kann je nach Anwendung gegebenenfalls auf die Zufuhrpumpe im ersten Dosagezweig verzichtet und beispielsweise durch ein Proportional-, Regel- oder Absperrventil, das die Zuleitung der entsprechenden Komponente regelt, ersetzt werden.

Ein zweiter Dosagezweig kann für die Zuleitung einer Nebenkomponente, beispielsweise Sirup, Pulpe, Aroma usw., eingerichtet sein. Der zweite Dosagezweig kann ein Dosageventil, beispielsweise realisiert als Proportional-, Regel- oder Sperrventil, aufweisen, um die Nebenkomponente der Umlaufleitung in der gewünschten Menge zuzuführen.

Das Dosageventil wird von der Steuerung angesteuert. Allerdings kann je nach Anwendung gegebenenfalls auf das Dosageventil verzichtet und beispielsweise durch eine Dosagebeziehungsweise Zufuhrpumpe ersetzt werden. Es können weitere Dosagezweige für die Zuleitung einer oder mehrerer weiterer Nebenkomponenten vorgesehen sein.

Durch ein Dosageventil kann eine Komponente beispielsweise mittels Gasdruck pumpenlos zudosiert werden, dies ist insbesondere bei Pulpe und/oder fruchtstückchenhaltigen oder allgemein feststoffaufweisenden Komponenten vorteilhaft, da diese durch die reine Gasförderung weniger Schaden nehmen.

Ein dritter Dosagezweig kann für die Zuleitung einer Gaskomponente, insbesondere CO₂ zur Karbonisierung des Füllprodukts, eingerichtet sein. Der dritte Dosagezweig kann ein Dosageventil, beispielsweise realisiert als Proportional- oder Sperrventil, aufweisen, um die Gaskomponente der Umlaufleitung in der gewünschten Menge zuzuführen. Das Dosageventil wird von der Steuerung angesteuert.

Es sei darauf hingewiesen, dass die Bezeichnungen "erster", "zweiter", "dritter" Dosagezweig keine Anzahl, Reihenfolge oder Priorisierung implizieren, sondern lediglich der sprachlichen Unterscheidung dienen. Beispielsweise ist es möglich, dass auf den zweiten Dosagezweig verzichtet wird und lediglich der erste und dritte Dosagezweig vorgesehen sind, zur Herstellung von Sprudelwasser. Es können beispielsweise auch lediglich zwei zweite Dosagezweige vorgesehen sein.

Jener Dosagezweig, der die Hauptkomponente einleitet, sofern vorhanden, mündet vorzugsweise stromaufwärts eines Dosagezweigs, der eine Nebenkomponente oder eine Gaskomponente eindosiert, in die Umlaufleitung ein. Ferner mündet jener Dosagezweig, der eine Gaskomponente eindosiert, vorzugsweise stromabwärts jener Dosagezweige, die eine flüssige Füllproduktkomponente einleiten, in die Umlaufleitung ein. Stromabwärts heißt hierbei noch vor Erreichen eines Kesseleinlaufs.

Vorzugsweise steht die Umlaufleitung an mehreren Kesseleinläufen und/oder an mehreren Kesselabläufen mit dem Füllerkessel in Fluidverbindung und ist somit eingerichtet, um das Füllprodukt an mehreren Stellen dem Füllerkessel zuzuführen beziehungsweise an mehreren Stellen aus dem Füllerkessel abzuziehen. Auf diese Weise können die Durchmischung des Füllprodukts beschleunigt und die Homogenität des Füllprodukts verbessert werden, was insbesondere im Zusammenhang mit dem hier beschriebenen integralen Aufbau der Vorrichtung von Vorteil ist.

Vorzugsweise weist der Mischer eine Umlaufpumpe auf, die in der Umlaufleitung angeordnet und eingerichtet ist, um das Füllprodukt in der Umlaufleitung in Umlauf zu bringen beziehungsweise zu zirkulieren. Vorzugsweise ist die Umlaufpumpe stromaufwärts der Einleitungen der Dosagezweige in die Umlaufleitung angeordnet, d.h. in einem vom Füllerkessel wegführenden Arm der Umlaufleitung, der hierin auch als "Umlaufableitung" bezeichnet ist.

Die Umlaufpumpe regelt die Förderleistung des Füllprodukts in der Umlaufleitung, wodurch die Durchmischung im Mischer und Füllerkessel gesteuert werden kann. Die Umlaufpumpe kann gegebenenfalls mittels eines Bypass-Ventils umgangen werden.

Um die Durchmischung der Komponenten zu erleichtern, können neben der Pumpe in der Umlaufleitung Einbauten, Vorsprünge oder andere rohrleitungsquerschnittsändernde Maßnahmen vorgesehen sein. Diese sind insbesondere zwischen Dosagezweigen und Kesseleinlauf angeordnet.

Vorzugsweise weist der Mischer eine Druckregelpumpe auf, die stromabwärts der Einleitungen der Dosagezweige in die Umlaufleitung angeordnet ist. Die Druckregelpumpe ist vorzugsweise als Kreiselpumpe mit einem Regelventil zur Druckabsenkung realisiert. Die Druckregelpumpe ist vorzugsweise eine Verdrängerpumpe, insbesondere im Anschluss an eine CO₂-Dosage. In der Umlaufleitung können weitere Pumpen vorgesehen sein, so beispielsweise eine weitere Leistungspumpe zur Regelung der Förderleistung, installiert zwischen den Einmündungen des ersten und zweiten und/oder zweiten und dritten Dosagezweigs.

Vorzugsweise weist der Mischer einen oder mehrere Sensoren auf, insbesondere zur Messung der Zusammensetzung des Füllprodukts in der Umlaufleitung und/oder des Volumenstroms, die stromabwärts der Einleitungen der Dosagezweige in die Umlaufleitung angeordnet sind. So kann beispielsweise eine BRIX-Messung im Füllprodukt und eine Volumenstrommessung zur Erhöhung der Ausmischgenauigkeit vorgenommen werden.

Alternativ oder zusätzlich können Sensoren an anderer Stelle im Mischer installiert sein, so beispielsweise vor dem ersten Dosagezweig und/oder zwischen zwei Dosagezweigen und/oder unmittelbar im Füllerkessel.

Vorzugsweise weist der Mischer einen Messzweig auf, der stromaufwärts der Einleitungen der Dosagezweige in die Umlaufleitung, d.h. in der Umlaufableitung, abzweigt und unter Umgehung der Dosagezweige stromabwärts der Einleitungen der Dosagezweige, d.h. in die Umlaufzuleitung, wieder in die Umlaufleitung einmündet.

Der Messzweig weist bevorzugt einen oder mehrere Sensoren auf, beispielsweise zur Messung der Zusammensetzung des Füllprodukts und/oder des Volumenstroms. Vorzugsweise umfasst der Messzweig eine Messzweigpumpe, die eingerichtet ist, um den Volumenfluss im Messzweig einzustellen, insbesondere konstant zu halten.

Alle Sensoren stehen mit der Steuerung in Kommunikation, um Informationen für die Regelung beziehungsweise Steuerung der Vorrichtung zu liefern.

Vorzugsweise steht die bereits angesprochene Steuerung mit dem Füller und dem Mischer in Kommunikation. Die Steuerung ist insbesondere zur Ansteuerung der Füllorgane, sprich zum Schalten der entsprechenden Ventile zum Einleiten des Füllprodukts in die Behälter, eingerichtet.

Die Steuerung steht bevorzugt auch mit anderen Komponenten der Vorrichtung in Kommunikation, beispielsweise Sensoren, Ventilen, Pumpen usw., um die mit der Vorrichtung durchführbaren Prozesse zu regeln beziehungsweise steuern. Die Steuerung kann zentral oder dezentral, Bestandteil internetbasierter und/oder cloudbasierter Anwendungen oder auf andere Weise implementiert sein, sowie gegebenenfalls auf Datenbanken zugreifen. Die Kommunikation der Steuerung mit den entsprechenden Komponenten kann drahtlos oder drahtgebunden erfolgen.

Vorzugsweise ist die Steuerung eingerichtet, um Füllproduktkomponenten und/oder andere Füllproduktparameter, beispielsweise die BRIX-Menge des Füllprodukts, separat aufzusummieren und das Einleiten der Füllproduktkomponenten aus den Dosagezweigen in die Umlaufleitung so zu steuern, dass die Summen der Füllproduktkomponenten beziehungsweise Füllproduktparameter einem vorgesehenen Verhältnis oder vorgesehenen Soll-Werten entsprechen.

Beispielsweise werden gemäß einem bevorzugten Ausführungsbeispiel die Wassermenge und die BRIX-Menge im Füllprodukt separat aufsummiert, wodurch unterschiedliche Konten für die einzelnen Füllproduktkomponenten oder Füllproduktparameter gebildet werden.

Die Menge an Sirup als eine beispielhafte Nebenkomponente wird dann so geregelt, dass die Summe dem gewünschten Verhältnis entspricht. In bestimmten Zeitintervallen oder bei Erreichen einer bestimmten Summe können die jeweiligen Summen anteilig entsprechend dem gewünschten Verhältnis gekürzt werden. Durch eine solche Registersteuerung wird die Messgenauigkeit deutlich erhöht, da die Differenz für die Ausregelung anderenfalls im Verhältnis zur Summe sehr klein werden könnte, wodurch Änderungen möglicherweise nicht mehr erkannt werden.

Vorzugsweise ist die Steuerung eingerichtet, um eine an den Füllstand im Füllerkessel angepasste Druckregelung des Füllerkessels vorzunehmen, so dass ein von der Steuerung definierter Druck im Füllerkessel vorliegt. Vorzugsweise nimmt die Steuerung eine an den Füllstand angepasste Druckregelung im Füllerkessel derart vor, dass der Druck auch bei veränderlichem Niveau beziehungsweise Füllstand stets gleich bleibt. Da der Füllerkessel in der vorliegenden integrierten Bauweise der Vorrichtung der einzige Pufferbehälter für das Füllprodukt ist und der Füllstand im Füllerkessel aus verschiedenen Gründen schwanken kann, etwa bei einer Unterbrechung, wenn sich die Produktqualität außerhalb der Rezeptur-Grenzwerte befindet, am Produktionsende oder bei einem Leerfahren des Füllerkessels, kann auf diese Weise ein Abfüllen gleichbleibender Qualität gewährleistet werden.

Alternativ oder zusätzlich kann ein niveaugesteuertes Füllen vorgenommen werden, d.h. eine Steuerung beziehungsweise Regelung der Füllgeschwindigkeit in Abhängigkeit vom jeweiligen Niveau im Behälter.

Um das Leerfahren des Füllerkessels zu erleichtern, kann die Steuerung eingerichtet sein, um die Umlaufleitung mit der Hauptkomponente, insbesondere Wasser, auszuschieben, wodurch sich Produktverluste am Produktionsende minimieren lassen.

Vorzugsweise weist die Vorrichtung eine CIP-Einrichtung auf, die eingerichtet ist, um ein CIP-Medium bereitzustelle und zur Durchführung einer CIP-Behandlung in Umlauf zu bringen, so dass die füllproduktführenden Oberflächen der Vorrichtung mit dem CIP-Medium in Kontakt kommen.

Eine etwaige CIP-Behandlung findet außerhalb des regulären Betriebs statt. Das CIP-Verfahren ("Cleaning-In-Place") und SIP-Verfahren ("Sterilization-In-Place") erlauben eine Reinigung beziehungsweise Sterilisation des Mischers und des Füllers, wobei auf eine Demontage der vom Füllprodukt beziehungsweise den Zwischenprodukten und Hilfsstoffen berührten Komponenten und Flächen im Wesentlichen verzichtet werden kann.

Beispielsweise müssen die Füllorgane für die Reinigung beziehungsweise Sterilisation nicht ausgebaut werden, sondern sie werden im eingebauten Zustand mit einem Reinigungsmedium oder Sterilisierungsmedium durchspült beziehungsweise bedämpft. Das SIP-Verfahren sei hierin der sprachlichen Einfachheit halber unter das CIP-Verfahren subsumiert, d.h. das CIP-Verfahren umfasst eine Reinigung und/oder Sterilisation.

Vorzugsweise umfasst das CIP-Medium Wasser und/oder Lauge, etwa Natronlauge, und/oder Säure, etwa Salpetersäure und/oder Peressigsäure, und/oder ein anderes Reinigungs- und/oder Desinfektionsmittel. Auch Alkohole, wie etwa Ethanol, können allein oder in Kombination als Behandlungsmedium genutzt werden. Ferner kann Heißdampf, Heißwasser alleinstehend oder als Träger für eine Sterilisation verwendet werden.

Vorzugsweise sind die Füllorgane mit CIP-Kappen ausgestattet, die behälterseitig und bedarfsweise zum Verschließen der Ausläufe der Füllorgane eingerichtet sind. Das CIP-Medium wird dann vorzugsweise über eine CIP-Rückleitung von den Füllorganen zur CIP-Einrichtung zurückgeführt.

Vorzugsweise ist die Umlaufpumpe eingerichtet, um das CIP-Medium zu befördern, wodurch die Umlaufpumpe synergetisch für den regulären Betrieb und die CIP-Behandlung genutzt werden kann. Alternativ oder zusätzlich können zur Förderung des CIP-Mediums weitere Komponenten des Mischers und/oder Füllers - Pumpen, Ventile, Leitungen usw. - genutzt werden. Vorzugsweise wird die Umlaufableitung des Mischers gleichzeitig als CIP-Rückleitung genutzt.

Die CIP-Leitung(en) und/oder CIP-Rückleitung(en) können mit CIP-Sensoren ausgestattet sein, um die Zusammensetzung des CIP-Mediums zu überwachen.

Vorzugsweise ist der Füller als Rundläufer und der Mischer relativ zum Füller stationär ausgebildet, wobei die Umlaufleitung über einen zumindest zweistufigen Drehverteiler vom Mischer zum Füllerkessel des Füllers und vice versa geführt wird.

Insbesondere wenn die Umlaufableitung des Mischers gleichzeitig als CIP-Rückleitung genutzt wird, kann der Drehverteiler statt als dreistufiger Drehverteiler als zweistufiger Drehverteiler konzipiert sein.

Insbesondere kann eine Quelle für CO₂ sowohl mit der Umlaufleitung als auch mit einem Kanal zum Vorspannen der abzufüllenden Behälter verbunden sein.

Die oben genannte Aufgabe wird ferner durch ein Verfahren zum Befüllen eines Behälters mit einem mehrkomponentigen Füllprodukt, vorzugsweise in einer Getränkeabfüllanlage, gelöst, wobei das Verfahren aufweist: Anmischen des Füllprodukts aus zumindest zwei Füllproduktkomponenten in einem Mischer, wobei der Mischer eine Umlaufleitung aufweist, die an zumindest einem Kesseleinlauf und an zumindest einem Kesselablauf mit einem Füllerkessel eines Füllers in Fluidverbindung steht; Einleiten des angemischten Füllprodukts über den Kesseleinlauf der Umlaufleitung in den Füllerkessel, Zwischenpuffern des Füllprodukts im Füllerkessel sowie Abziehen des Füllprodukts über den Kesselablauf aus dem Füllerkessel, wodurch das Füllprodukt in einem regulären Betrieb in einem Kreislauf geführt wird; und Zuleiten des Füllprodukts aus dem Füllerkessel an ein Füllorgan über eine Produktleitung und Einleiten des Füllprodukts über das Füllorgan in den Behälter; und Temperieren des Füllprodukts in der Umlaufleitung mittels eines Wärmetauschers, wobei der Mischer in Schwerkraftrichtung gesehen zumindest teilweise oberhalb des Füllers angeordnet ist.

Die Merkmale, technischen Wirkungen, Vorteile sowie Ausführungsbeispiele, die in Bezug auf die Vorrichtung beschrieben wurden, gelten analog für das Verfahren.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Figuren.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Darstellung einer Vorrichtung zum Befüllen von Behältern mit einem mehrkomponentigen Füllprodukt gemäß einem Ausführungsbeispiel;
- Figur 2: eine schematische Darstellung einer Vorrichtung zum Befüllen von Behältern mit einem mehrkomponentigen Füllprodukt gemäß einem weiteren Ausführungsbeispiel;
- Figur 3: eine schematische Darstellung einer Vorrichtung zum Befüllen von Behältern mit einem mehrkomponentigen Füllprodukt gemäß einem weiteren Ausführungsbeispiel;
- Figur 4: eine schematische Darstellung einer Vorrichtung zum Befüllen von Behältern mit einem mehrkomponentigen Füllprodukt gemäß einem weiteren Ausführungsbeispiel;
- Figur 5: eine schematische Darstellung einer Vorrichtung zum Befüllen von Behältern mit einem mehrkomponentigen Füllprodukt gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanz zu vermeiden.

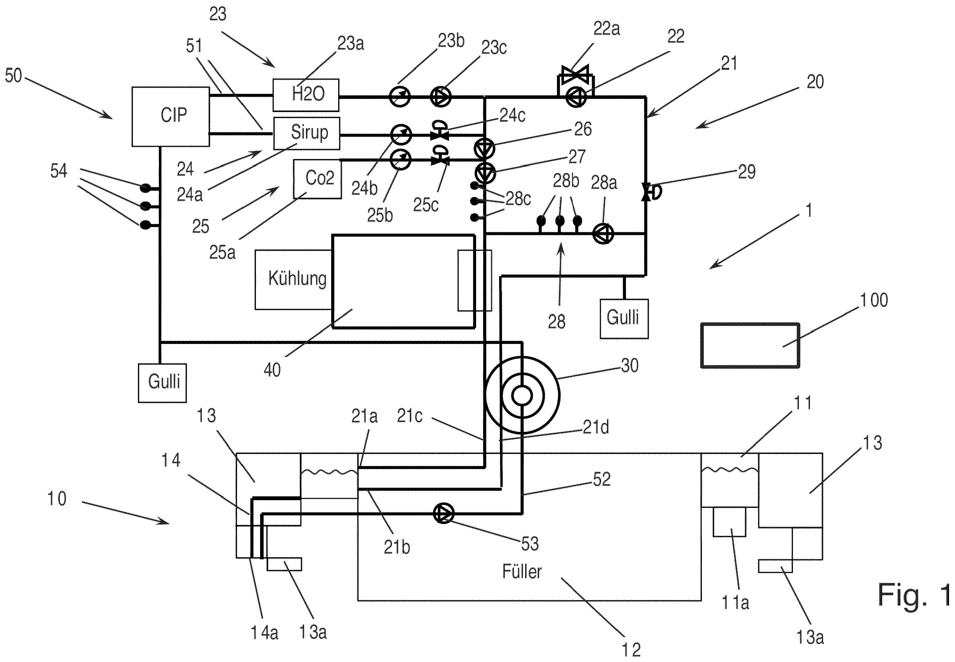

Die Figur 1 zeigt eine schematische Darstellung einer Vorrichtung 1 zum Befüllen eines oder mehrerer Behälter (in den Figuren nicht dargestellt) mit einem mehrkomponentigen Füllprodukt gemäß einem Ausführungsbeispiel.

Die Vorrichtung 1 weist einen Füller 10 mit einem Füllerkessel 11 auf, der vorzugsweise als Ringkessel ausgeführt ist. Insbesondere kann der Füller 10 als Rundläufer implementiert sein, wobei sich der Füllerkessel 11 im Fall der in der Figur 1 gezeigten ringförmigen Ausführung vorzugsweise umfangsseitig an einem rotierbaren Füllerkarussell 12 befindet. Allerdings kann der Füllerkessel 11 auch als Zentralkessel oder auf andere Weise realisiert sein.

Der Füllerkessel 11 dient der Aufnahme sowie Vermischung des Füllprodukts und versorgt mehrere Füllorgane 13, die eingerichtet sind, um das Füllprodukt in die Behälter einzuleiten. Zu diesem Zweck wird ein zu befüllender Behälter unterhalb eines entsprechenden Füllorgans 13 platziert. Während des Füllprozesses kann die Behältermündung mit dem Füllorgan 13 druckdicht in Kontakt stehen, wodurch der Füllprozess als Gegendruckverfahren oder Unterdruckverfahren durchführbar ist. Allerdings kann das Füllorgan 13 auch als Freistrahlventil ausgebildet sein, so dass das Füllprodukt nach Überbrückung eines Freistrahlbereiches in die Mündung des Behälters eingefüllt wird. Der zu befüllende Behälter wird über eine Behälterhalterung, die beispielsweise eine Halteklammer zum Halten des Behälters im Halsbereich und/oder einen Halteboden aufweist, während der Befüllung an dem oder unter dem Füllorgan 13 gehalten.

Der Füllerkessel 11 kann mit einer Ultraschallausgasung 11a ausgestattet sein, die am Boden des Füllerkessels 11 angeordnet und eingerichtet ist, um durch Anwendung von Ultraschall eine Entgasung des Füllprodukts vorzunehmen oder zu unterstützen.

Das Füllprodukt wird über eine Produktleitung 14 vom Füllerkessel 11 in das jeweilige Füllorgan 13 geleitet. Das Füllorgan 13 umfasst ein Füllventil, vorzugsweise ein Proportionalventil, um den Volumenstrom des Füllprodukts zu variieren, d.h. die pro Zeiteinheit in den Behälter eingeleitete Füllproduktmenge zu regulieren. Alternativ oder zusätzlich kann ein Regelventil oder ein Sperrventil vorgesehen sein, welches einen Auslauf 14a der Produktleitung 14 nach Bedarf öffnet/schließt.

Die Vorrichtung 1 weist eine Steuerung 100 auf, die zur Ansteuerung der Füllorgane 13, sprich zum Schalten der Füllventile, eingerichtet ist. Zu diesem Zweck steht die Steuerung 100 entsprechend mit den Füllorganen in Kommunikation. Die Steuerung steht auch mit anderen Komponenten der Vorrichtung 1 in Kommunikation, beispielsweise mit Sensoren, Ventilen, Pumpen usw., um die mit der Vorrichtung 1 durchführbaren Prozesse zu steuern beziehungsweise zu regeln. Die Steuerung 100 kann zentral oder dezentral, Bestandteil internetbasierter und/oder cloudbasierter Anwendungen oder auf andere Weise implementiert sein, sowie gegebenenfalls auf Datenbanken zugreifen. Die Kommunikation der Steuerung 100 mit den entsprechenden Komponenten kann drahtlos oder drahtgebunden erfolgen. Die Kommunikationswege der Steuerung 100 mit den entsprechenden Komponenten sind in den Figuren der Übersichtlichkeit halber nicht eingezeichnet.

Die Vorrichtung 1 weist einen Mischer 20 auf, der eingerichtet ist, um das Füllprodukt herzustellen, indem mehrere Füllproduktkomponenten im richtigen Verhältnis einander zugeführt werden. Der Mischer 20 nimmt auch eine zumindest teilweise Vermischung der Füllproduktkomponenten vor - die Vermischung erfolgt teilweise auch im Füllerkessel 11 - und führt das Füllprodukt dem Füllerkessel 11 zu.

Vorzugsweise befindet sich der Mischer 20 oberhalb des Füllers 10, so dass die Schwerkraft bei der Zufuhr des Füllprodukts in den Füllerkessel 11 genutzt werden kann und die Einleitung der Füllproduktkomponenten in die Umlaufleitung 21 nicht gegen einen hohen hydrostatischen Druck erfolgen muss. Eine solche räumliche Anordnung zwischen Mischer 20 und Füller 10 trägt zur Verbesserung der Ausmischgenauigkeit der Füllproduktkomponenten bei.

Der Mischer 20 umfasst eine Umlaufleitung 21, die an einem Kesseleinlauf 21a das Füllprodukt in den Füllerkessel 11 einleitet und an einem Kesselablauf 21b das Füllprodukt aus dem Füllerkessel 11 abzieht, wodurch das Füllprodukt in der Umlaufleitung 21 während des regulären Betriebs der Vorrichtung 1 in einem Kreislauf geführt wird. Die Kreislaufleitung 21, insbesondere deren Kesseleinlauf 21a und Kesselablauf 21b, befindet sich somit zum Teil auch im Füller 10.

Indem das Füllprodukt über die Umlaufleitung 21 in einem stetigen Umlauf gehalten wird, findet eine permanente Durchmischung und Homogenisierung des Füllprodukts unter Einbeziehung des Füllerkessels 11 statt. Des Weiteren können die Zusammensetzung und Qualität des Füllprodukts kontinuierlich geprüft und bei Abweichungen vom Sollzustand nachjustiert werden.

Ist der Füller 10 als Rundläufer ausgebildet, so wird die Kreislaufleitung 21 über einen Drehverteiler 30 vom stationären Anlagenteil, d.h. dem Mischer 20, zum rotierenden Anlagenteil, d.h. dem Füller 10, geführt und vice versa. Die Umlaufleitung 20 weist in Relation zum Füllerkessel 11 zwei Arme auf, die als Umlaufzuleitung 21c und Umlaufableitung 21d bezeichnet seien. Der Drehverteiler 30 ist somit zumindest ein zweistufiger Drehverteiler, mit zumindest zwei (in der vorliegenden Ausführungsform drei) getrennten Leitungen beziehungsweise Durchgängen.

Der Mischer 20 weist eine Umlaufpumpe 22 auf, die vorzugsweise in der Umlaufableitung 21d der Umlaufleitung 20, d.h. zwischen dem Kesselablauf 21b und den Zuleitungen der Füllproduktkomponenten (weiter unten beschrieben), angeordnet und eingerichtet ist, um das Füllprodukt in der Umlaufleitung 21 im Umlauf zu fördern. Die Umlaufpumpe 22 regelt die Förderleistung des Füllprodukts in der Umlaufleitung 21. Die Umlaufpumpe 22 kann gegebenenfalls mittels eines Bypass-Ventils 22a umgangen werden.

Die verschiedenen Füllproduktkomponenten werden über mehrere Dosagezweige 23, 24 und 25 in die Umlaufleitung 21 eingeleitet. Im vorliegenden Ausführungsbeispiel sind drei Dosagezweige 23, 24, 25 vorgesehen, wobei deren Anzahl je nach Anwendung geeignet festgelegt werden kann. Die Dosagezweige 23, 24, 25 weisen jeweils ein Dosagereservoir 23a, 24a, 25a auf, das die entsprechende Dosagekomponente vorhält. Die Dosagereservoire 23a, 24a, 25a können als Kessel oder auch als Zulauf der entsprechenden Komponente realisiert sein. Die Dosagezweige 23, 24, 25 umfassen vorzugsweise jeweils einen Durchflussmesser 23b, 24b, 25b, die eingerichtet sind, um den im entsprechenden Dosagezweig 23, 24, 25 geförderten beziehungsweise transportierten Volumenstrom zu messen und die Daten der Steuerung 100 für die Steuerung beziehungsweise Regelung der Anlage zur Verfügung zu stellen.

Die Dosagezweige 23, 24, 25, insbesondere deren Einmündungen in die Umlaufleitung 21, befinden sich aus den oben genannten Gründen vorzugsweise oberhalb des Füllerkessels 11 beziehungsweise oberhalb des regulären Füllstands, auch um Produktverluste zu minimieren.

Ein erster Dosagezweig 23 kann für die Zuleitung einer Hauptkomponente, vorzugsweise Wasser, eingerichtet sein. Der erste Dosagezweig 23 kann eine Zufuhrpumpe 23c aufweisen, um die Hauptkomponente der Umlaufleitung 21 aktiv zuzuführen. Die Zufuhrpumpe 23c wird von der Steuerung 100 angesteuert. Die Zufuhrpumpe 23c ist vorzugsweise als Kreiselpumpe ausgeführt. Allerdings kann je nach Anwendung gegebenenfalls auf die Zufuhrpumpe 23c verzichtet und beispielsweise durch ein Proportional-, Regel- oder Absperrventil, das die Zuleitung der entsprechenden Komponente regelt, ersetzt werden.

Ein zweiter Dosagezweig 24 kann für die Zuleitung einer Nebenkomponente, beispielsweise Sirup, Pulpe, Aroma usw., eingerichtet sein. Der zweite Dosagezweig 24 kann ein Dosageventil 24c, beispielsweise realisiert als Proportional-, Regel- oder Sperrventil, aufweisen, um die Nebenkomponente der Umlaufleitung 21 in der gewünschten Menge zuzuführen. Das Dosageventil 24c wird von der Steuerung 100 angesteuert. Allerdings kann je nach Anwendung gegebenenfalls auf das Dosageventil 24c verzichtet und beispielsweise durch eine Dosage- beziehungsweise Zufuhrpumpe ersetzt werden. Es können weitere Dosagezweige 24 für die Zuleitung einer oder mehrerer weiterer Nebenkomponenten vorgesehen sein.

Ein dritter Dosagezweig 25 kann für die Zuleitung einer Gaskomponente, insbesondere CO₂ zur Karbonisierung des Füllprodukts, eingerichtet sein. Der dritte Dosagezweig 25 kann ein Dosageventil 25c, beispielsweise realisiert als Proportional-, Regel- oder Sperrventil, aufweisen, um die Gaskomponente der Umlaufleitung 21 in der gewünschten Menge zuzuführen. Das Dosageventil 25c wird von der Steuerung 100 angesteuert.

In der Umlaufleitung 21 können weitere Pumpen vorgesehen sein, so beispielsweise eine weitere Leistungspumpe 26 zur Regelung der Förderleistung, vorzugsweise installiert zwischen den Einmündungen des ersten und zweiten Dosagezweigs 23, 24, und/oder eine Druckregelpumpe 27, vorzugsweise installiert stromabwärts des dritten Dosagezweigs 25. Die Druckregelpumpe 27 ist vorzugsweise eine Verdrängerpumpe, insbesondere im Anschluss an eine CO₂-Dosage. die Druckregelpumpe 27 ist vorzugsweise als Kreiselpumpe mit einem Regelventil zur Druckabsenkung realisiert.

Von der Umlaufableitung 21d zweigt vorzugsweise ein Messzweig 28 ab, der unter Umgehung der Dosagezweige 23, 24, 25 in die Umlaufzuleitung 21c der Umlaufleitung 21 einmündet. In dem Messzweig 28 ist vorzugsweise eine Messzweigpumpe 28a vorgesehen, um den Volumenfluss im Messzweig 28 einzustellen, insbesondere konstant zu halten.

Der Messzweig 28 weist einen oder mehrere Sensoren 28b auf, um die Zusammensetzung des Füllprodukts, den Volumenstrom und/oder andere Prozesseigenschaften zu messen. So kann beispielsweise eine BRIX-Messung im Füllprodukt und eine Volumenstrommessung zur Erhöhung der Ausmischgenauigkeit im Messzweig 28 vorgenommen werden. Alternativ oder zusätzlich können zwischen dem dritten (=letzten) Dosagezweig 25 und der Einmündung des Messzweigs 28 Sensoren 28c zu dem gleichen oder einem anderen Zweck installiert sein.

Weitere Sensoren können je nach Bedarf in den Füllproduktleitungen installiert sein, so beispielsweise vor, d.h. stromaufwärts des ersten Dosagezweigs 23, zwischen zwei Dosagezweigen 23, 24, 25 und/oder unmittelbar im Füllerkessel 11. Im letzteren Fall kann zur Qualitätssicherung die endgültig abzufüllende Zusammensetzung des Füllprodukts ermittelt werden.

Alle Sensoren stehen mit der Steuerung 100 in Kommunikation, um Informationen für die Regelung beziehungsweise Steuerung der Vorrichtung 1 zu liefern.

Des Weiteren kann ein Dosagezweigventil 29 stromabwärts, d.h. hinter dem Abzweig des Messzweigs 28 in der Umlaufableitung 21d vorgesehen sein, um den Volumenstrom einstellen und/oder die Dosagezweige 23, 24, 25 insgesamt umgehen zu können.

Besonders bevorzugt weist der Mischer 20 einen Wärmetauscher 40 auf, der zur Kühlung des Füllprodukts eingerichtet ist, vorzugsweise in der Umlaufzuleitung 21c, wodurch beispielsweise die CO₂-Aufnahme, sofern karbonisierte Füllprodukte abzufüllen sind, verbessert wird. Darüber hinaus kann der Wärmetauscher 40 genutzt werden, um ein CIP-Medium während einer Reinigung und/oder Sterilisation im Rahmen einer CIP-Anwendung (weiter unten Beschrieben) zu erhitzen. Der Wärmetauscher 40 ist vorzugsweise stromabwärts der Dosagezweige 23, 24, 25 sowie stromabwärts der Einmündung des Messzweigs 28 in die Umlaufzuleitung 21c sowie stromaufwärts des Drehverteilers 30 angeordnet.

Während des regulären Betriebs der Vorrichtung 1, d.h. während eines Anmisch- und Abfüllprozesses, werden die Füllproduktkomponenten über die Dosagezweige 23, 24, 25 in einem gewünschten Mischungsverhältnis in die Umlaufleitung 21 eingeleitet und über die entsprechenden Pumpen 22, 26, 27 mit einer bestimmten Geschwindigkeit befördert. Sofern der Füllerkessel 11 zuvor entleert wurde, steigt der Füllstand allmählich an. Während des Umlaufs wird die Zusammensetzung von den Sensoren 28b, 28c überwacht, um Veränderungen und etwaige Abweichungen von der gewünschten Rezeptur durch die Steuereinheit 100 ermitteln und gegebenenfalls nachjustieren zu können.

Der Füllerkessel 11 ist in der vorliegenden integrierten Bauweise der Vorrichtung 1 der einzige Pufferbehälter für das Füllprodukt. Der Füllstand im Füllerkessel kann aus verschiedenen Gründen schwanken, etwa bei einer Unterbrechung, wenn sich die Produktqualität außerhalb der Rezeptur-Grenzwerte befindet, am Produktionsende oder bei einem Leerfahren des Füllerkessels 11. Bei einem Füller 10 mit Blasmaschine, der beispielsweise für das Abfüllen von PET-Flaschen vorgesehen ist, sollte das Niveau im Füllerkessel 11 bei jedem Stopp so weit abgesenkt werden, dass die bereits aufgeblasenen Flaschen im System noch abgefüllt werden können. Andernfalls entstünden hohe Flaschenverluste.

Füllstandschwankungen führen zu einer Druckänderung im Füllerkessel 11, wodurch sich die Füllgeschwindigkeit ändern kann. Um dennoch eine präzise Abfüllung zu gewährleisten, ist die Steuerung 100 vorzugsweise eingerichtet, um eine an den Füllstand angepasste Druckregelung im Füllerkessel 11 vorzunehmen, so dass der Druck auch bei veränderlichem Niveau beziehungsweise Füllstand definiert ist, insbesondere stets gleich bleibt.

Alternativ kann ein niveaugesteuertes Füllen vorgenommen werden, d.h. eine Regelung der Füllgeschwindigkeit in Abhängigkeit vom jeweiligen Niveau im Behälter.

Um das Leerfahren des Füllerkessels 11 zu erleichtern, kann die Steuerung 100 eingerichtet sein, um die Umlaufleitung 11 mit der Hauptkomponente, insbesondere Wasser, auszuschieben, wodurch sich Produktverluste am Produktionsende minimieren lassen.

Um eine möglichst effiziente Steuerung des Mischers 20 zu gewährleisten, ist die Steuerung 100 vorzugsweise eingerichtet, um die Eindosierung der Füllproduktkomponenten nicht anhand aktueller Volumenströme durchzuführen, sondern durch separate Aufsummierung der Füllproduktkomponenten oder von Füllproduktparametern. Beispielsweise werden die Wassermenge und die BRIX-Menge separat aufsummiert, wodurch unterschiedliche Konten für die einzelnen Füllproduktkomponenten oder Füllproduktparameter gebildet werden. Die Menge an Sirup als eine beispielhafte Nebenkomponente wird dann so geregelt, dass die Summe dem gewünschten Verhältnis entspricht. In bestimmten Zeitintervallen oder bei Erreichen einer bestimmten Summe werden die jeweiligen Summen anteilig entsprechend dem gewünschten Verhältnis gekürzt. Durch eine solche Registersteuerung wird die Messgenauigkeit deutlich erhöht, da die Differenz für die Ausregelung anderenfalls im Verhältnis zur Summe sehr klein werden kann, wodurch Änderungen möglicherweise nicht mehr erkannt werden.

Neben dem regulären Betrieb erlaubt die Vorrichtung 1 gemäß dem vorliegenden Ausführungsbeispiel eine CIP-Reinigung. Das CIP-Verfahren ("Cleaning-In-Place") und SIP-Verfahren ("Sterilization-In-Place") erlauben eine Reinigung beziehungsweise Sterilisation des Mischers 20 und des Füllers 10, wobei auf eine Demontage der vom Füllprodukt beziehungsweise den Zwischenprodukten und Hilfsstoffen berührten Komponenten und Flächen im Wesentlichen verzichtet werden kann. Beispielsweise müssen die Füllorgane 13 für die Reinigung beziehungsweise Sterilisation nicht ausgebaut werden, sondern sie werden im eingebauten Zustand mit einem Reinigungsmedium oder Sterilisierungsmedium durchspült beziehungsweise bedämpft.

Das SIP-Verfahren sei hierin der sprachlichen Einfachheit halber unter das CIP-Verfahren subsumiert, d.h. das CIP-Verfahren umfasst eine Reinigung und/oder Sterilisation.

Die Vorrichtung 1 weist zur Durchführung eines CIP-Verfahrens eine CIP-Einrichtung 50 auf, die ein CIP-Medium bereitstellt und zur Durchführung der Behandlung in Umlauf bringen kann, so dass die zu reinigenden beziehungsweise zu sterilisierenden Oberflächen mit dem CIP-Medium in Kontakt kommen. Vorzugsweise umfasst das CIP-Medium Wasser und/oder Lauge, etwa Natronlauge, und/oder Säure, etwa Salpetersäure und/oder Peressigsäure, und/oder ein anderes Desinfektionsmittel. Auch Alkohole, wie etwa Ethanol, können allein oder in Kombination als Behandlungsmedium genutzt werden. Ferner kann Heißdampf alleinstehend oder als Trägermedium für die Sterilisation verwendet werden.

Die CIP-Einrichtung 50 weist eine oder mehrere CIP-Leitungen 51 auf, die das CIP-Medium in das Leitungssystem der Vorrichtung 1 einbringen. Im vorliegenden Ausführungsbeispiel wird das CIP-Medium über zwei CIP-Leitungen 51 in die Dosagereservoire 23a, 24a eingebracht, wodurch es über die Dosagezweige 23, 24 in die Umlaufleitung 21, den Füllerkessel 11 und schließlich in die Füllorgane 13 gelangt.

Die Füllorgane 13 sind mit CIP-Kappen 13a ausgestattet, die behälterseitig und bedarfsweise zum Verschließen der Ausläufe 14a der Füllorgane 13 eingerichtet sind. Beispielsweise können die CIP-Kappen 13a rotatorisch oder linear unter die jeweiligen Ausläufe 14a bewegt und nach Beendigung der CIP-Behandlung wieder entfernt werden. Das CIP-Medium wird an den Ausläufen 14a von den CIP-Kappen 13a umgelenkt und über eine CIP-Rückleitung 52 zur CIP-Einrichtung 50 zurückgeführt, so dass das CIP-Medium zirkuliert beziehungsweise in Umlauf gebracht werden kann. Zu diesem Zweck befindet sich in der CIP-Rückleitung 52 vorzugsweise eine CIP-Pumpe 53.

Allerdings können die Pumpen 22, 26, 27 der Vorrichtung 1 alternativ oder zusätzlich zur Förderung des CIP-Mediums eingesetzt werden. In anderen Worten, die vorhandenen Pumpen 22, 26, 27 der Vorrichtung 1 können synergetisch als CIP Rückführ- beziehungsweise Zirkulationspumpe(n) genutzt werden. Auch der Wärmetauscher 40 kann synergetisch genutzt werden, indem er während der CIP-Behandlung als Heizeinrichtung für das CIP-Medium fungiert.

Die CIP-Rückleitung 52 wird im vorliegenden Ausführungsbeispiel als separate Leitung durch den Drehverteiler 30 geführt, so dass dieser ein dreistufiger Drehverteiler 30 ist.

Die CIP-Leitung(en) 51 und/oder CIP-Rückleitung(en) 52 können mit CIP-Sensoren 54 ausgestattet sein, um die Zusammensetzung des CIP-Mediums zu überwachen.

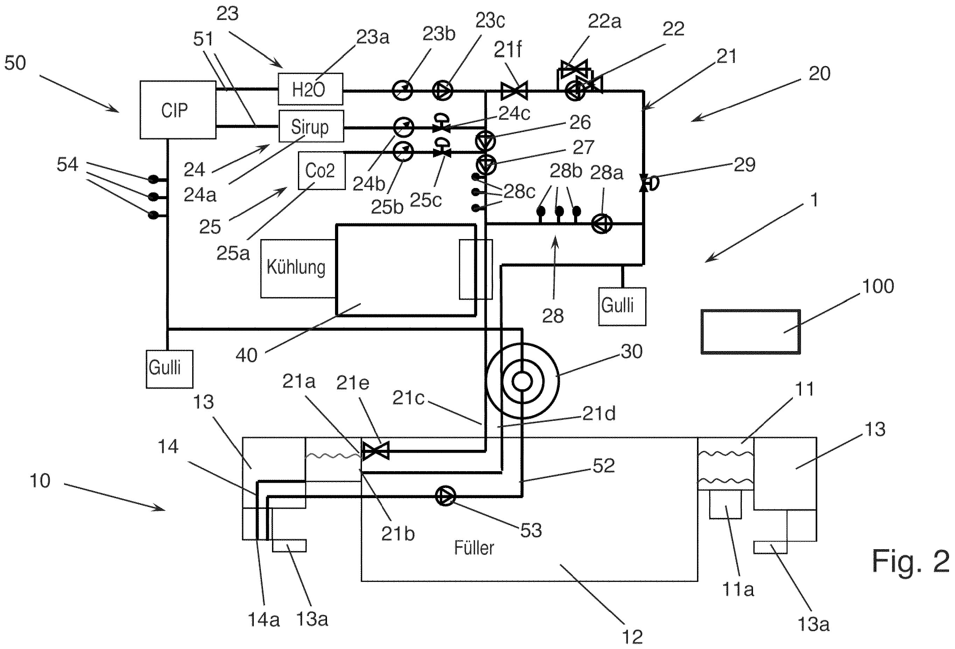

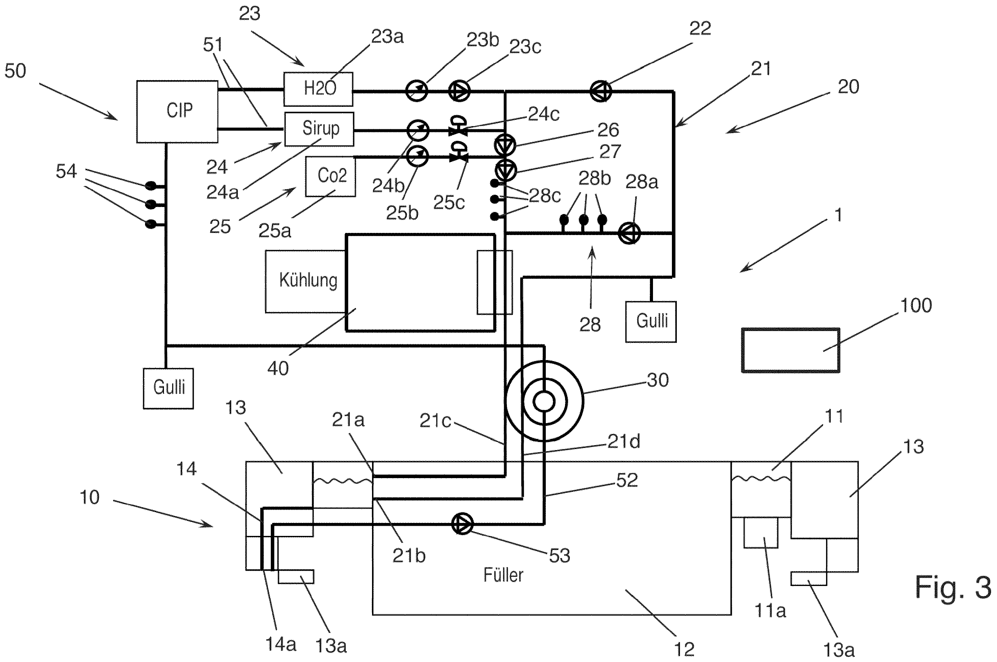

Die Figuren 2 und 3 zeigen weitere Ausführungsbeispiele der Vorrichtung 1, die an das Ausführungsbeispiel der Figur 1 angelehnt sind und sich durch die Anwendung und Anordnung von Ventilen unterscheiden.

So ist gemäß der Figur 2 die Umlaufzuleitung 21c am Kesseleinlauf 21a mit einem Ventil 21e, vorzugsweise Sperrventil, ausgestattet, um den Zulauf des Füllprodukts zum Füllerkessel 11 stoppen zu können, etwa wenn sich die Produktqualität außerhalb der Rezeptur-Grenzwerte befindet. Alternativ oder zusätzlich kann zwischen der Umlaufpumpe 22 und dem ersten Dosagezweig 23 ein weiteres Ventil 21f installiert sein, um die Umlaufzuleitung 21c und die Umlaufableitung 21d voneinander zu trennen.

Im Ausführungsbeispiel der Figur 3 wurde auf das Bypass-Ventil 22a verzichtet.

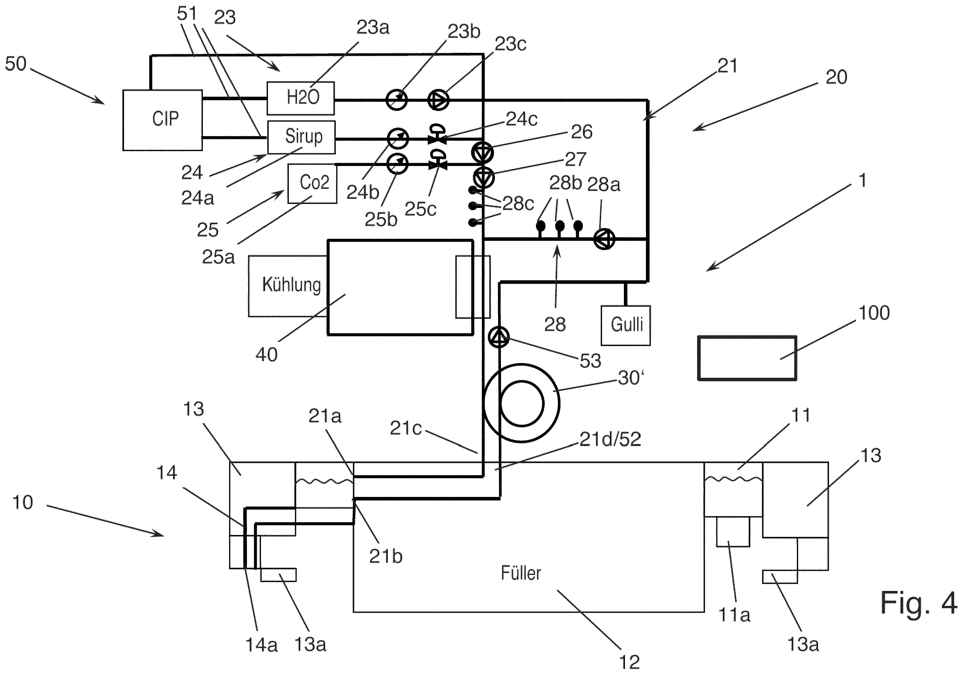

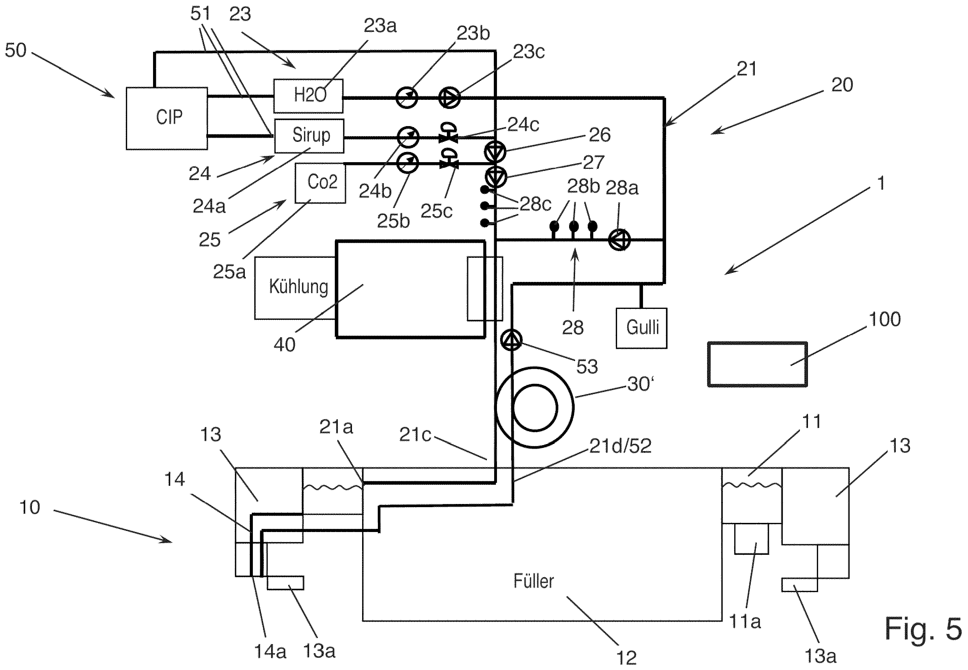

Die Ausführungsbeispiele der Figuren 4 und 5 zeigen, dass die Umlaufableitung 21d gleichzeitig als CIP-Rückleitung 52 fungieren kann, wodurch der Drehverteiler statt als dreistufiger Drehverteiler 30 gemäß den Figuren 1 bis 3 als zweistufiger Drehverteiler 30' konzipiert sein kann.

Im Ausführungsbeispiel der Figur 4 erfolgt die Rückführung des CIP-Mediums über den Füllerkessel 11, wobei in diesem Fall vorzugsweise ein Ventil am Kesselablauf 21b der Umlaufableitung 21d/CIP-Rückleitung 52 installiert ist. Vorzugsweise ist hier die Umlaufpumpe 22 im mischerseitigen Abschnitt der Umlaufableitung 21d/CIP-Rückleitung 52, unterhalb (stromaufwärts) des Messzweigs 28 vorgesehen.

Im Ausführungsbeispiel der Figur 5 erfolgt die Zirkulation des CIP-Mediums sowie des Füllprodukts nicht über den Füllerkessel 11, sondern über das Füllorgan 13.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Befüllen eines Behälters mit einem Füllprodukt
- 10: Füller
- 11: Füllerkessel
- 11a: Ultraschallausgasung
- 12: Füllerkarussell
- 13: Füllorgan
- 14: Produktleitung
- 14a: Auslauf
- 20: Mischer
- 21: Umlaufleitung
- 21a: Kesseleinlauf
- 21b: Kesselablauf
- 21c: Umlaufzuleitung
- 21d: Umlaufableitung
- 21e: Ventil
- 21f: Ventil
- 22: Umlaufpumpe
- 22a: Bypass-Ventil
- 23: Dosagezweig
- 23a: Dosagereservoir
- 23b: Durchflussmesser
- 23c: Zufuhrpumpe
- 24: Dosagezweig
- 24a: Dosagereservoir
- 24b: Durchflussmesser
- 24c: Dosageventil
- 25: Dosagezweig
- 25a: Dosagereservoir
- 25b: Durchflussmesser
- 25c: Dosageventil
- 26: Leistungspumpe
- 27: Druckregelpumpe
- 28: Messzweig
- 28a: Messzweigpumpe
- 28b: Sensor
- 28c: Sensor
- 29: Dosagezweigventil
- 30: Drehverteiler
- 30': Drehverteiler
- 40: Wärmetauscher
- 50: CIP-Einrichtung
- 51: CIP-Leitung
- 52: CIP-Rückleitung
- 53: CIP-Pumpe
- 54: CIP-Sensor
- 100: Steuerung

## Patentansprüche

1. Vorrichtung (1) zum Befüllen eines Behälters mit einem mehrkomponentigen Füllprodukt, vorzugsweise in einer Getränkeabfüllanlage, wobei die Vorrichtung (1) aufweist:
einen Füller (10) mit zumindest einem Füllorgan (13), das zum Einleiten des Füllprodukts in den Behälter eingerichtet ist, und einem Füllerkessel (11), vorzugsweise als Ringkessel ausgeführt, der zur Zwischenpufferung des Füllprodukts eingerichtet ist und mit dem Füllorgan (13) über eine Produktleitung (14) in Fluidverbindung steht, um das Füllorgan (13) mit dem Füllprodukt zu versorgen; und
einen Mischer (20), der eingerichtet ist, um das Füllprodukt aus zumindest zwei Füllproduktkomponenten anzumischen; wobei
der Mischer (20) eine Umlaufleitung (21) aufweist, die an zumindest einem Kesseleinlauf (21a) und an zumindest einem Kesselablauf (21b) mit dem Füllerkessel (11) in Fluidverbindung steht und eingerichtet ist, um das Füllprodukt über den Kesseleinlauf (21a) dem Füllerkessel (11) zuzuführen und über den Kesselablauf (21b) aus dem Füllerkessel (11) abzuziehen, wodurch das Füllprodukt in einem regulären Betrieb in einem Kreislauf geführt wird; und
der Mischer (20) zumindest einen Dosagezweig (23, 24, 25), bevorzugt zumindest zwei Dosagezweige (23, 24, 25), aufweist, eingerichtet, um je eine Füllproduktkomponente in die Umlaufleitung (21) einzuleiten; wobei
der Mischer (20) einen Wärmetauscher (40) aufweist, der zur Temperierung des Füllprodukts in der Umlaufleitung (21) eingerichtet ist;
**dadurch gekennzeichnet, dass**
der Mischer (20) in Schwerkraftrichtung gesehen zumindest teilweise oberhalb des Füllers (10) angeordnet ist.

2. Vorrichtung (1) nach Anspruch 1, **dadurch gekennzeichnet, dass** die Einmündungen eines, mehrerer oder aller Dosagezweige (23, 24, 25) in die Umlaufleitung (21) oberhalb eines regulären Füllstands des Füllerkessels (11), vorzugsweise oberhalb des Füllerkessels (11), angeordnet sind.

3. Vorrichtung (1) nach Anspruch 1 oder 2, **dadurch gekennzeichnet, dass** der Mischer (20) pufferfrei ausgebildet ist und pufferfrei mit dem Füllerkessel (11) in Fluidverbindung steht.

4. Vorrichtung (1) nach einem der vorigen Ansprüche, **dadurch gekennzeichnet, dass** der Wärmetauscher (40) stromabwärts der Einleitungen der Dosagezweige (23, 24, 25) in die Umlaufleitung (21) angeordnet ist und/oder zum Kühlen des Füllprodukts eingerichtet ist.

5. Vorrichtung (1) nach einem der vorigen Ansprüche, **dadurch gekennzeichnet, dass** ein erster Dosagezweig (23) eingerichtet ist, um eine Hauptkomponente, vorzugsweise Wasser, in die Umlaufleitung (21) einzuleiten, und/oder ein zweiter Dosagezweig (24) eingerichtet ist, um eine Nebenkomponente, vorzugsweise Sirup, in die Umlaufleitung (21) einzuleiten, und/oder ein dritter Dosagezweig (25) eingerichtet ist, um eine Gaskomponente, vorzugsweise CO₂, in die Umlaufleitung (21) einzuleiten.

6. Vorrichtung (1) nach einem der vorigen Ansprüche, **dadurch gekennzeichnet, dass** die Umlaufleitung (21) an mehreren Kesseleinläufen (21a) und/oder an mehreren Kesselabläufen (21b) mit dem Füllerkessel (11) in Fluidverbindung steht und somit eingerichtet ist, um das Füllprodukt an mehreren Stellen dem Füllerkessel (11) zuzuführen beziehungsweise an mehreren Stellen aus dem Füllerkessel (11) abzuziehen.

7. Vorrichtung (1) nach einem der vorigen Ansprüche, **dadurch gekennzeichnet, dass** der Mischer (20) eine Umlaufpumpe (22) aufweist, die in der Umlaufleitung (21) angeordnet und eingerichtet ist, um das Füllprodukt in der Umlaufleitung (21) in Umlauf zu bringen, wobei die Umlaufpumpe (22) vorzugsweise stromaufwärts der Einleitungen der Dosagezweige (23, 24, 25) in die Umlaufleitung (21) angeordnet ist.

8. Vorrichtung (1) nach einem der vorigen Ansprüche, **dadurch gekennzeichnet, dass** der Mischer (20) eine Druckregelpumpe (27) aufweist, die stromabwärts der Einleitungen der Dosagezweige (23, 24, 25) in die Umlaufleitung (21) angeordnet ist, wobei die Druckregelpumpe (27) vorzugsweise als Kreiselpumpe mit einem Regelventil zur Druckabsenkung realisiert ist.

9. Vorrichtung (1) nach einem der vorigen Ansprüche, **dadurch gekennzeichnet, dass** der Mischer (20) einen oder mehrere Sensoren (28c), vorzugsweise zur Messung der Zusammensetzung des Füllprodukts in der Umlaufleitung (21) und/oder des Volumenstroms, aufweist, die stromabwärts der Einleitungen der Dosagezweige (23, 24, 25) in die Umlaufleitung (21) angeordnet sind.

10. Vorrichtung (1) nach einem der vorigen Ansprüche, **dadurch gekennzeichnet, dass** der Mischer (20) einen Messzweig (28) aufweist, der stromaufwärts der Einleitungen der Dosagezweige (23, 24, 25) in die Umlaufleitung (21) abzweigt und unter Umgehung der Dosagezweige (23, 24, 25) stromabwärts der Einleitungen der Dosagezweige (23, 24, 25) wieder in die Umlaufleitung (21) einmündet, wobei der Messzweig (28) einen oder mehrere Sensoren (28b), vorzugsweise zur Messung der Zusammensetzung des Füllprodukts und/oder des Volumenstroms, aufweist, wobei der Messzweig (28) vorzugsweise eine Messzweigpumpe (28a) aufweist, die eingerichtet ist, um den Volumenfluss im Messzweig (28) einzustellen.

11. Vorrichtung (1) nach einem der vorigen Ansprüche, **dadurch gekennzeichnet, dass** eine Steuerung (100) in Kommunikation mit dem Füller (10) und dem Mischer (20) vorgesehen und vorzugsweise eingerichtet ist, um Füllproduktkomponenten und/oder Füllproduktparameter separat aufzusummieren und das Einleiten der Füllproduktkomponenten aus den Dosagezweigen (23, 24, 25) in die Umlaufleitung (21) so zu steuern, dass die Summen der Füllproduktkomponenten beziehungsweise Füllproduktparameter einem vorgesehenen Verhältnis oder vorgesehenen Soll-Werten entsprechen, wobei
die Steuerung (100) vorzugsweise eingerichtet, um eine an den Füllstand im Füllerkessel (11) angepasste Druckregelung im Füllerkessel (11) vorzunehmen, so dass ein von der Steuerung (100) definierter Druck im Füllerkessel (11) vorliegt, der vorzugsweise auch bei veränderlichem Füllstand stets gleich bleibt.

12. Vorrichtung (1) nach einem der vorigen Ansprüche, **dadurch gekennzeichnet, dass** eine Cleaning-In-Place, CIP, Einrichtung (50) vorgesehen ist, die eingerichtet ist, um ein CIP-Medium bereitzustellen und zur Durchführung einer CIP-Behandlung in Umlauf zu bringen, so dass die produktführenden Oberflächen der Vorrichtung (1) mit dem CIP-Medium in Kontakt kommen.

13. Vorrichtung (1) nach Anspruch 7 und 12, **dadurch gekennzeichnet, dass** die Umlaufpumpe (22) eingerichtet ist, um das CIP-Medium zu befördern.

14. Vorrichtung (1) nach einem der vorigen Ansprüche, **dadurch gekennzeichnet, dass** der Füller (10) als Rundläufer und der Mischer (20) relativ zum Füller (10) stationär ausgebildet sind, wobei die Umlaufleitung (21) über einen zumindest zweistufigen Drehverteiler vom Mischer (20) zum Füllerkessel (11) des Füllers (10) und vice versa geführt wird.

15. Verfahren zum Befüllen eines Behälters mit einem mehrkomponentigen Füllprodukt, vorzugsweise in einer Getränkeabfüllanlage, wobei das Verfahren aufweist:
Anmischen des Füllprodukts aus zumindest zwei Füllproduktkomponenten in einem Mischer (20), wobei der Mischer (20) eine Umlaufleitung (21) aufweist, die an zumindest einem Kesseleinlauf (21a) und an zumindest einem Kesselablauf (21b) mit einem Füllerkessel (11) eines Füllers (10) in Fluidverbindung steht;
Einleiten des angemischten Füllprodukts über den Kesseleinlauf (21a) der Umlaufleitung (21) in den Füllerkessel (11), Zwischenpuffern des Füllprodukts im Füllerkessel (11) sowie Abziehen des Füllprodukts über den Kesselablauf (21b) aus dem Füllerkessel (11), wodurch das Füllprodukt in einem regulären Betrieb in einem Kreislauf geführt wird;
Zuleiten des Füllprodukts aus dem Füllerkessel (11) an ein Füllorgan (13) über eine Produktleitung (14) und Einleiten des Füllprodukts über das Füllorgan (13) in den Behälter; und
Temperieren des Füllprodukts in der Umlaufleitung (21) mittels eines Wärmetauschers;
**dadurch gekennzeichnet, dass**
der Mischer (20) in Schwerkraftrichtung gesehen zumindest teilweise oberhalb des Füllers (10) angeordnet ist.

## Claims

1. An apparatus (1) for filling a container with a multi-component filling product, preferably in a beverage filling plant, wherein the apparatus (1) comprises:
a filler (10) having at least one filling element (13) configured to feed in the filling product into the container, and a filler bowl (11), preferably configured as a ring bowl, which is configured for intermediate buffering of the filling product and is in fluid communication with the filling element (13) via a product line (14) in order to provide the filling element (13) with the filling product; and
a mixer (20) which is configured to mix the filling product from at least two filling product components; wherein
the mixer (20) has a circulation line (21) which is in fluid communication with the filler bowl (11) at at least a bowl inlet (21a) and at least a bowl outlet (21b) and is configured to supply the filling product to the filler bowl (11) via the bowl inlet (21a) and to remove the filling product from the filler bowl (11) via the bowl outlet (21b), as a result of which the filling product is circulated during normal operation; and
the mixer (20) has at least one metering branch (23, 24, 25), preferably at least two metering branches (23, 24, 25) configured to each feed in one filling product component into the circulation line (21); wherein
the mixer (20) has a heat exchanger (40) which is configured to control the temperature of the filling product in the circulation line (21);
**characterized in that**
the mixer (20) is arranged at least in part above the filler (10) when viewed in the direction of gravity.

2. The apparatus (1) according to claim 1, **characterized in that** the inflows of one, a plurality of or all metering branches (23, 24, 25) into the circulation line (21) are arranged above a normal fill level of the filler bowl (11), preferably above the filler bowl (11).

3. The apparatus (1) according to claim 1 or 2, **characterized in that** the mixer (20) is configured without buffers and is in fluid communication with the filler bowl (11) without buffers.

4. The apparatus (1) according to any of the preceding claims,
**characterized in that** the heat exchanger (40) is arranged downstream of the in-feeds of the metering branches (23, 24, 25) into the circulation line (21) and/or is configured to cool the filling product.

5. The apparatus (1) according to any of the preceding claims,
**characterized in that** a first metering branch (23) is configured to feed in a primary component, preferably water, into the circulation line (21), and/or a second metering branch (24) is configured to feed in a secondary component, preferably syrup, into the circulation line (21), and/or a third metering branch (25) is configured to feed in a gas component, preferably CO₂, into the circulation line (21).

6. The apparatus (1) according to any of the preceding claims,
**characterized in that** the circulation line (21) is in fluid communication with the filler bowl (11) at a plurality of bowl inlets (21a) and/or at a plurality of bowl outlets (21b) and is thus configured to supply the filling product to the filler bowl (11) at a plurality of points or to remove it from the filler bowl (11) at a plurality of points.

7. The apparatus (1) according to any of the preceding claims,
**characterized in that** the mixer (20) comprises a circulation pump (22) which is arranged in the circulation line (21) and configured to circulate the filling product in the circulation line (21), wherein the circulation pump (22) is preferably arranged upstream of the in-feeds of the metering branches (23, 24, 25) into the circulation line (21).

8. The apparatus (1) according to any of the preceding claims,
**characterized in that** the mixer (20) comprises a pressure-regulating pump (27) which is arranged downstream of the in-feeds of the metering branches (23, 24, 25) into the circulation line (21), wherein the pressure-regulating pump (27) is preferably implemented as a centrifugal pump having a control valve for pressure reduction.

9. The apparatus (1) according to any of the preceding claims,
**characterized in that** the mixer (20) comprises one or more sensors (28c), preferably for measuring the composition of the filling product in the circulation line (21) and/or for measuring the volumetric flow rate, which sensors are arranged downstream of the in-feeds of the metering branches (23, 24, 25) into the circulation line (21).

10. The apparatus (1) according to any of the preceding claims,
**characterized in that** the mixer (20) comprises a measuring branch (28) which branches off upstream of the in-feeds of the metering branches (23, 24, 25) into the circulation line (21) and, bypassing the metering branches (23, 24, 25), flows into the circulation line (21) again downstream of the in-feeds of the metering branches (23, 24, 25), wherein the measuring branch (28) has one or more sensors (28b), preferably for measuring the composition of the filling product and/or for measuring the volumetric flow rate, wherein the measuring branch (28) preferably has a measuring branch pump (28a) which is configured to adjust the volume flow rate in the measuring branch (28).

11. The apparatus (1) according to any of the preceding claims,
**characterized in that** a control unit (100) in communication with the filler (10) and with the mixer (20) is provided and preferably configured to separately add up the filling product components and/or filling product parameters and to control the feeding in of the filling product components from the metering branches (23, 24, 25) into the circulation line (21) such that the totals of the filling product components or filling product parameters correspond to a specified ratio or specified target values, wherein
the control unit (100) is preferably configured to perform a pressure regulation in the filler bowl (11), which pressure regulation is adjusted to the filling level in the filler bowl (11), so that a pressure defined by the control unit (100) is present in the filler bowl (11), which pressure preferably always remains the same even when the filling level is variable.

12. The apparatus (1) according to any of the preceding claims,
**characterized in that** a cleaning-in-place (CIP) device (50) is provided which is configured to provide a CIP medium and to circulate it in order to carry out a CIP treatment, so that the product-supplying surfaces of the apparatus (1) come into contact with the CIP medium.

13. The apparatus (1) according to claims 7 and 12, **characterized in that** the circulation pump (22) is configured to deliver the CIP medium.

14. The apparatus (1) according to any of the preceding claims,
**characterized in that** the filler (10) is a rotary machine and the mixer (20) is stationary relative to the filler (10), wherein the circulation line (21) is guided from the mixer (20) to the filler bowl (11) of the filler (10) and vice versa via an at least two-stage rotary distributor.

15. A method for filling a container with a multicomponent filling product, preferably in a beverage filling plant, wherein the method comprises:
mixing the filling product from at least two filling product components in a mixer (20), wherein the mixer (20) comprises a circulation line (21) which is in fluid communication with a filler bowl (11) of a filler (10) at at least a bowl inlet (21a) and at least a bowl outlet (21b);
feeding in the mixed filling product via the bowl inlet (21a) of the circulation line (21) into the filling bowl (11), intermediate buffering of the filling product in the filling bowl (11) and removal of the filling product via the bowl outlet (21b) from the filling bowl (11), as a result of which the filling product is circulated during normal operation;
feeding the filling product from the filler bowl (11) to a filling element (13) via a product line (14) and feeding in the filling product via the filling element (13) into the container; and
temperature control of the filling product in the circulation line (21) by a heat exchanger;
**characterized in that**
the mixer (20) is arranged at least in part above the filler (10) when viewed in the direction of gravity.

## Revendications

1. Dispositif (1) permettant le remplissage d'un récipient avec un produit de remplissage à plusieurs composants, de préférence dans une installation de remplissage de boissons, dans lequel le dispositif (1) présente :
une remplisseuse (10) comportant au moins un organe de remplissage (13), qui est destiné à introduire le produit de remplissage dans le récipient, et une cuve de remplisseuse (11), de préférence sous la forme d'une cuve annulaire, qui est destinée à servir de réservoir tampon intermédiaire au produit de remplissage et qui est en communication fluidique avec l'organe de remplissage (13) par l'intermédiaire d'une conduite de produit (14), afin d'alimenter l'organe de remplissage (13) en produit de remplissage ; et
un mélangeur (20) qui est destiné à mélanger le produit de remplissage à partir d'au moins deux composants de produit de remplissage ; dans lequel
le mélangeur (20) présente une conduite de circulation (21) qui est en communication fluidique avec la cuve de remplisseuse (11) au niveau d'au moins une entrée de cuve (21a) et d'au moins une sortie de cuve (21b), et qui est destinée à acheminer le produit de remplissage vers la cuve de remplisseuse (11) par l'intermédiaire de l'entrée de cuve (21a) et de l'évacuer de la cuve de remplisseuse (11) par l'intermédiaire de la sortie de cuve (21b), moyennant quoi, en fonctionnement normal, le produit de remplissage est guidé dans un circuit ; et
le mélangeur (20) présente au moins une branche de dosage (23, 24, 25), de préférence au moins deux branches de dosage (23, 24, 25), destinée à introduire un composant de produit de remplissage dans chaque conduite de circulation (21) ; dans lequel
le mélangeur (20) présente un échangeur de chaleur (40) qui est destiné à la thermorégulation du produit de remplissage dans la conduite de circulation (21) ;
**caractérisé en ce que**
le mélangeur (20) est agencé, vu dans le sens de la gravité, au moins partiellement au-dessus de la remplisseuse (10).

2. Dispositif (1) selon la revendication 1, **caractérisé en ce que** les embouchures d'une, de plusieurs ou de l'ensemble des branches de dosage (23, 24, 25) dans la conduite de circulation (21) sont agencées au-dessus d'un niveau de remplissage normal de la cuve de remplisseuse (11), de préférence au-dessus de la cuve de remplisseuse (11).

3. Dispositif (1) selon la revendication 1 ou 2, **caractérisé en ce que** le mélangeur (20) est conçu sans tampon et est en communication fluidique avec la cuve de remplisseuse (11) sans tampon.

4. Dispositif (1) selon l'une des revendications précédentes,
**caractérisé en ce que** l'échangeur de chaleur (40) est agencé en aval des introductions des branches de dosage (23, 24, 25) dans la conduite de circulation (21) et/ou est destiné à refroidir le produit de remplissage.

5. Dispositif (1) selon l'une des revendications précédentes,
**caractérisé en ce qu'**une première branche de dosage (23) est destinée à introduire un composant principal, de préférence de l'eau, dans la conduite de circulation (21), et/ou qu'une deuxième branche de dosage (24) est destinée à introduire un composant secondaire, de préférence du sirop, dans la conduite de circulation (21), et/ou qu'une troisième branche de dosage (25) est destinée à introduire un composant gazeux, de préférence du CO₂, dans la conduite de circulation (21).

6. Dispositif (1) selon l'une des revendications précédentes,
**caractérisé en ce que** la conduite de circulation (21) est en communication fluidique au niveau de plusieurs entrées de cuve (21a) et/ou de plusieurs sorties de cuve (21b) avec la cuve de remplisseuse (11) et est ainsi destinée à acheminer le produit de remplissage vers la cuve de remplisseuse (11) en plusieurs points ou pour l'évacuer de la cuve de remplisseuse (11) en plusieurs points.

7. Dispositif (1) selon l'une des revendications précédentes,
**caractérisé en ce que** le mélangeur (20) présente une pompe de circulation (22) qui est agencée dans la conduite de circulation (21) et destinée à faire circuler le produit de remplissage dans la conduite de circulation (21), dans lequel la pompe de circulation (22) est de préférence agencée en amont des introductions des branches de dosage (23, 24, 25) dans la conduite de circulation (21).

8. Dispositif (1) selon l'une des revendications précédentes,
**caractérisé en ce que** le mélangeur (20) présente une pompe de régulation de pression (27) qui est agencée en aval des introductions des branches de dosage (23, 24, 25) dans la conduite de circulation (21), dans lequel la pompe de régulation de pression (27) est de préférence réalisée sous la forme d'une pompe centrifuge comportant une vanne de régulation destinée à réduire la pression.

9. Dispositif (1) selon l'une des revendications précédentes,
**caractérisé en ce que** le mélangeur (20) présente un ou plusieurs capteurs (28c), de préférence pour mesurer la composition du produit de remplissage dans la conduite de circulation (21) et/ou le débit volumique, qui sont agencés en aval des introductions des branches de dosage (23, 24, 25) dans la conduite de circulation (21).

10. Dispositif (1) selon l'une des revendications précédentes,
**caractérisé en ce que** le mélangeur (20) présente une branche de mesure (28), qui se ramifie en amont des introductions des branches de dosage (23, 24, 25) dans la conduite de circulation (21) et, en contournant les branches de dosage (23, 24, 25), débouche en aval des introductions des branches de dosage (23, 24, 25) de nouveau dans la conduite de circulation (21), dans lequel la branche de mesure (28) présente un ou plusieurs capteurs (28b), de préférence pour mesurer la composition du produit de remplissage et/ou le débit volumique, dans lequel la branche de mesure (28) présente de préférence une pompe de branche de mesure (28a) qui est destinée à régler le débit volumique dans la branche de mesure (28).

11. Dispositif (1) selon l'une des revendications précédentes,
**caractérisé en ce qu'**une commande (100) est prévue, en communication avec la remplisseuse (10) et le mélangeur (20), et est de préférence destinée à totaliser séparément les composants de produit de remplissage et/ou des paramètres de produit de remplissage, et à commander l'introduction des composants de produit de remplissage provenant des branches de dosage (23, 24, 25) vers la conduite de circulation (21) de telle sorte que les sommes des composants de produit de remplissage ou des paramètres de produit de remplissage correspondent à un rapport prévu ou à des valeurs de consigne prévues, dans lequel
la commande (100) est de préférence destinée à assurer une régulation de pression dans la cuve de remplisseuse (11) adaptée au niveau de remplissage de la cuve de remplisseuse (11), de sorte qu'une pression définie par la commande (100) est maintenue dans la cuve de remplisseuse (11), laquelle pression reste de préférence toujours constante même en cas de variation du niveau de remplissage.

12. Dispositif (1) selon l'une des revendications précédentes,
**caractérisé en ce qu'**une installation (50) de nettoyage en place, CIP, est prévue, laquelle est destinée à fournir un fluide CIP et le mettre en circulation afin d'effectuer un traitement CIP, de sorte que les surfaces du dispositif (1) guidant le produit entrent en contact avec le fluide CIP.

13. Dispositif (1) selon la revendication 7 et 12, **caractérisé en ce que** la pompe de circulation (22) est destinée à transporter le fluide CIP.

14. Dispositif (1) selon l'une des revendications précédentes,
**caractérisé en ce que** la remplisseuse (10) est conçue sous forme de machine rotative et le mélangeur (20) est conçu fixe par rapport à la remplisseuse (10), dans lequel la conduite de circulation (21) est guidée, par l'intermédiaire d'un distributeur rotatif à au moins deux étages, du mélangeur (20) vers la cuve de remplisseuse (11) de la remplisseuse (10) et inversement.

15. Procédé pour le remplissage d'un récipient avec un produit de remplissage à plusieurs composants, de préférence dans une installation de remplissage de boissons, dans lequel le procédé présente :
le mélange du produit de remplissage à partir d'au moins deux composants de produit de remplissage dans un mélangeur (20), dans lequel le mélangeur (20) présente une conduite de circulation (21) qui est en communication fluidique au niveau d'au moins une entrée de cuve (21a) et d'au moins une sortie de cuve (21b) avec une cuve de remplisseuse (11) d'une remplisseuse (10) ;
l'introduction du produit de remplissage mélangé dans la cuve de remplisseuse (11) par l'intermédiaire de l'entrée de cuve (21a) de la conduite de circulation (21), le stockage temporaire du produit de remplissage dans la cuve de remplisseuse (11) ainsi que l'évacuation du produit de remplissage de la cuve de remplisseuse (11) par l'intermédiaire de la sortie de cuve (21b), moyennant quoi, en fonctionnement normal, le produit de remplissage est guidé dans un circuit ;
l'alimentation du produit de remplissage de la cuve de remplisseuse (11) à un organe de remplissage (13) par l'intermédiaire d'une conduite de produit (14) et l'introduction du produit de remplissage dans le récipient par l'intermédiaire de l'organe de remplissage (13) ; et
la thermorégulation du produit de remplissage dans la conduite d'écoulement (21) par le biais d'un échangeur de chaleur ;
**caractérisé en ce que**
le mélangeur (20) est agencé, vu dans le sens de la gravité, au moins partiellement au-dessus de la remplisseuse (10).
